# EUROPEAN PATENT APPLICATION

(11) **EP 3 251 933 A1**
(43) Date of publication of application: **06.12.2017**
(21) Application number: 17000608.4
(22) Date of filing: 10.04.2017
(51) Int. Cl.: B62K 21/26

(54) **INTERCHANGEABLE KNOB FOR HANDLES AND RELATED FASTENING SYSTEM**

(30) Priority: 12.04.2016 IT UA20162502
(71) Applicant: Absolute Ternus S.r.l., 12100 Cuneo (IT)
(72) Inventor: Matteo, Berta Giovanni, I-10070 Cantoira (TO) (IT)
(74) Representative: Garavelli, Paolo

(57) **Abstract**

Interchangeable knob (10) for handles comprising a hollow core (11) inserted into an external layer (14) and comprising an internal recess (16) in which an end (21) with reduced section of a frame (20) is adapted to be inserted, and fastening means (15) adapted to removably fasten the knob (10) to the frame (20) and to prevent it from being withdrawn from the frame (20).

## Description

The present invention refers to a knob for handles, for example to be used a handlebar of a cycle, or a motorcycle or with the handle of a crutch, and to the related fastening system to make it interchangeable.

Knobs for handles of handlebars or of crutches are known in the art, which can be replaced, for example when they are worn.

These knobs however are not satisfactory and have the following problems: a problem with known knobs note is that, not being arranged to be interchangeable, their replacement is difficult.

Another problem is that known knobs, having a standard size, cannot be easily suited to different users' needs.

A further problem is that known knobs cannot be customized to make them ergonomic, for example providing them with a shaped surface.

Object of the present invention is solving the above prior art problems, by providing an interchangeable knob for handles and its related fastening system which allows its easy replacement though keeping an efficient fastening to the al frame.

The above and other objects and advantages of the invention, as will appear from the following description, are obtained with an interchangeable knob for handles and its related fastening system as claimed in the respective independent claims. Preferred embodiments and non-trivial variations of the present invention are the subject matter of the dependent claims.

It is intended that all enclosed claims are an integral part of the present description.

The present invention will be better described by some preferred embodiments thereof, provided as a non-limiting example, with reference to the enclosed drawings, in which:

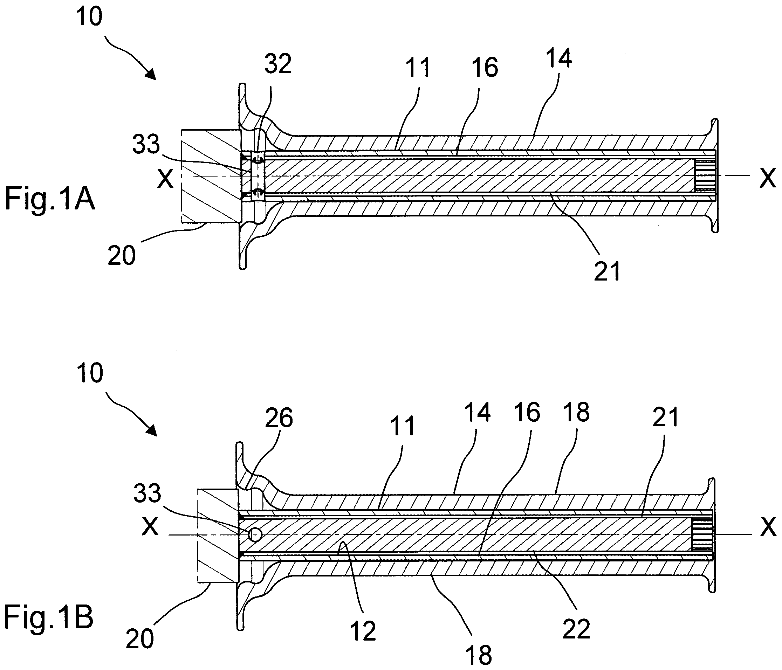

- Figures 1A and 1B are longitudinal sectional views of an embodiment of an interchangeable knob for handles and its related fastening system according to the present invention;
- Figures 2A, 2B, 2C and 2D are cross sectional views of embodiments of an interchangeable knob for handles and its related fastening system according to the present invention;
- Figure 3 is a longitudinal sectional view of an embodiment of an interchangeable knob for handles and its related fastening system according to the present invention;
- Figures 4A and 4B are longitudinal sectional views of an embodiment of an interchangeable knob for handles and its related fastening system according to the present invention;
- Figures 5A and 5B are respectively a cross sectional view and a perspective view of an embodiment of an interchangeable knob for handles and its related fastening system according to the present invention;
- Figure 6 is a longitudinal sectional view of a part of an embodiment of an interchangeable knob for handles and its related fastening system according to the present invention;
- Figure 7 is a longitudinal sectional view of an embodiment of an interchangeable knob for handles and its related fastening system according to the present invention;
- Figure 8 is a cross sectional view of the embodiment of an interchangeable knob for handles and its related fastening system of Figure 7; and
- Figure 9 is a longitudinal sectional view of an embodiment of an interchangeable knob for handles and its related fastening system according to the present invention.

With reference to the Figures, preferred embodiments of the interchangeable knob for handles and its related fastening system of the present invention are shown and described. It will be immediately obvious that numerous variations and modifications (for example related to shape, sizes, arrangements and parts with equivalent functionality) can be made to what is described, without departing from the scope of the invention, as appears from the enclosed claims.

With reference to the Figures, the interchangeable knob 10 for handles of the invention comprises a hollow core 11, preferably made of rigid plastic material and inserted into an external layer 14 made of a second material, preferably rubber, synthetic rubber or spongy materials.

The core 11 of the knob 10 comprises a longitudinal internal recess 16, which is adapted to be assembled on a frame 20, in particular on an end 21 with reduced section of the frame 20, which is adapted to be inserted into the internal recess 16.

In particular, the internal recess 16 of the core 11 comprises an internal surface 12, which is in contact with an external surface 22 of the end 21 with reduced section of the frame 20, when the knob 10 is assembled on the frame 20.

The frame 20 is preferably a handlebar frame, for example of a cycle or of a motorcycle, or of a crutch.

The external layer 14 of the knob 10 preferably has a substantially cylindrical shape and has an external surface 18, an opening 26 through which the end 21 of the frame 20 can be inserted, and a transverse base 27, preferably perpendicular, to a longitudinal axis X-X of the knob 10.

Preferably, the external surface 18 of the external layer 14 of the knob 10 is shaped as to make the knob 10 ergonomic, for example including on the external surface 18 the mold of the palm of a user's hand.

In a preferred way, the opening 26 has a greater diameter than the diameter of the core 11, to join the knob 10 with the part of frame 20 with greater section, and is made next to the end of the knob 10 adapted to be assembled in contact with the frame 20; next to the opening 26, the external layer 14 is not in contact any more with the core 11 and widens, getting in contact with the frame 20.

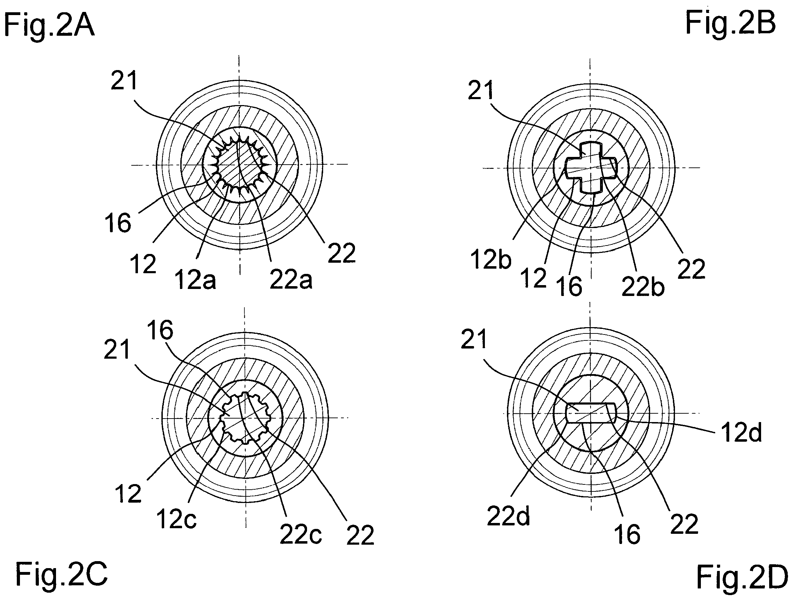

In a preferred way, as shown in Figures 2A, 2B, 2C and 2D, the longitudinal internal recess 16 and the end 21 with reduced section of the frame 20 respectively have grooves of the recesses 12a, 12b, 12c, 12d made on the internal surface 12 of the recess 16 and grooves of the frame 22a, 22b, 22c, 22d made on the external surface 22 of the end 21 with reduced section of the frame 20.

The surfaces of the grooves of the recesses 12a, 12b, 12c, 12d, and of the grooves of the frame 22a, 22b, 22c, 22d when the knob 10 is assembled on the frame 20, are mutually in contact.

Preferably, the grooves of the recesses 12a, 12b, 12c, 12d and the grooves of the frame 22a, 22b, 22c, 22d are longitudinal grooves and have sections with profiles having radial bits 12a and 22a, or teeth 12b, 12c and 22b, 22c or a profile 12d and 22d with a substantially rectangular shape.

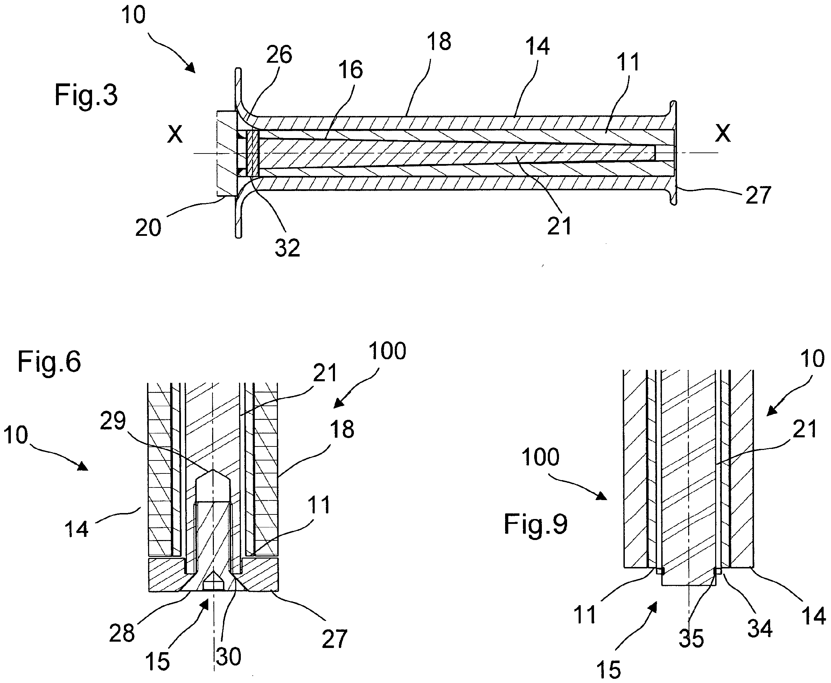

Preferably, the internal recess 16 of the core 11 and the end 21 of the frame 20 have a conical or tapered shape, which narrows towards the external part of the knob 10, as shown in Figure 3.

The fastening system 100 of the invention comprises the knob 10 and fastening means 15, 25 adapted to fasten the knob 10 to the frame 20 in a removable way and adapted to avoid withdrawing the knob 10 from the frame 20, in particular from its end 21 with reduced section.

Preferably, the knob 10 comprises first fastening means 15 adapted to be connected to second fastening means 25 made on the end 21 of the frame 20 having with reduced section; in a preferred way, the core 11 comprises first fastening means 15 adapted to be connected to second fastening means 25 made on the end 21 of the frame 20 having with reduced section.

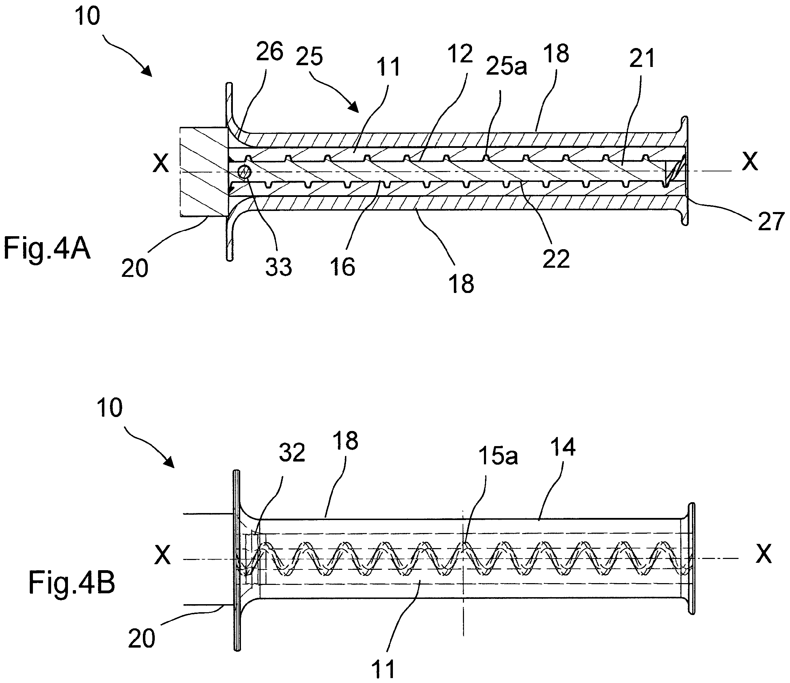

In an embodiment of the knob 10 of the invention shown in Figures 4A and 4B, the core 11 and the end 21 of the frame 20 can be fastened through first fastening means 15 composed of a seat 15a with lead screw made on the internal surface 12 of the recesses 16 of the core 11, and second fastening means 25 composed of a thread 25a, made on the external surface 22 of the end 21 of the frame 20.

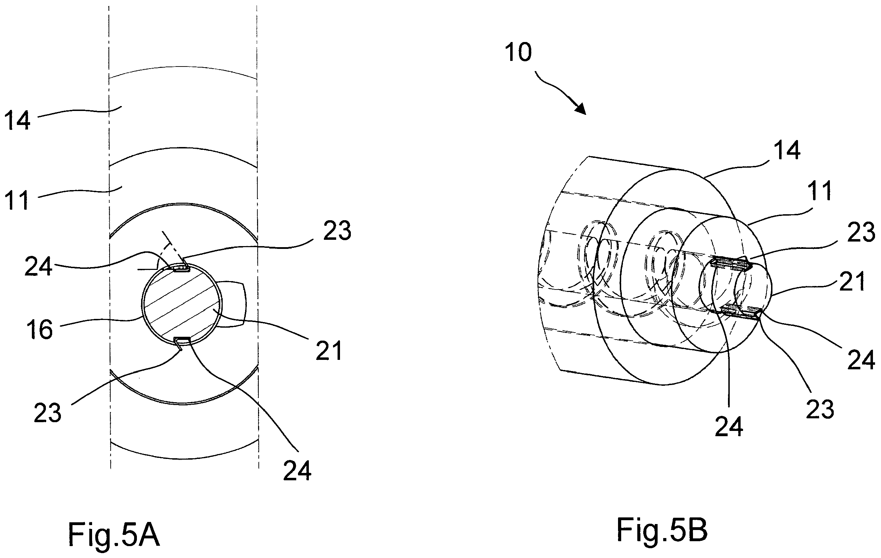

Preferably, the fastening means comprise a spring 23, for example a leaf spring 23 shown in Figures 5A and 5B, which is connected, for example inserted or fastened in a known way inside a seat 24 of the end 21.

The spring 23 when is bent remains inside the profile of the end 21 with reduced section of the frame 20 in order to allow the passage of the end 21 in the internal recess 16 of the core 11 when the knob 10 is inserted into the end 21 with reduced section of the frame 20, and adapted to project from the side surface of the end 21, to automatically block the knob 10 after that it has been inserted into the end 21 with reduced section of the frame 20.

In another embodiment of the knob 10 and of the fastening system 100 of the invention shown in Figure 6, the knob 10 and the end 21 of the frame 20 are capable of being connected through fastening means 15 adapted to be connected to the removable base 27 and to the end 21 of the frame 20, for example composed of a screw 28 screwed into a threaded hole 29 made in the end 21 of the frame 20, and inserted preferably into a hole 30 made in the removable base 27, to removably fasten the knob 10 to the end 21 of the frame 20.

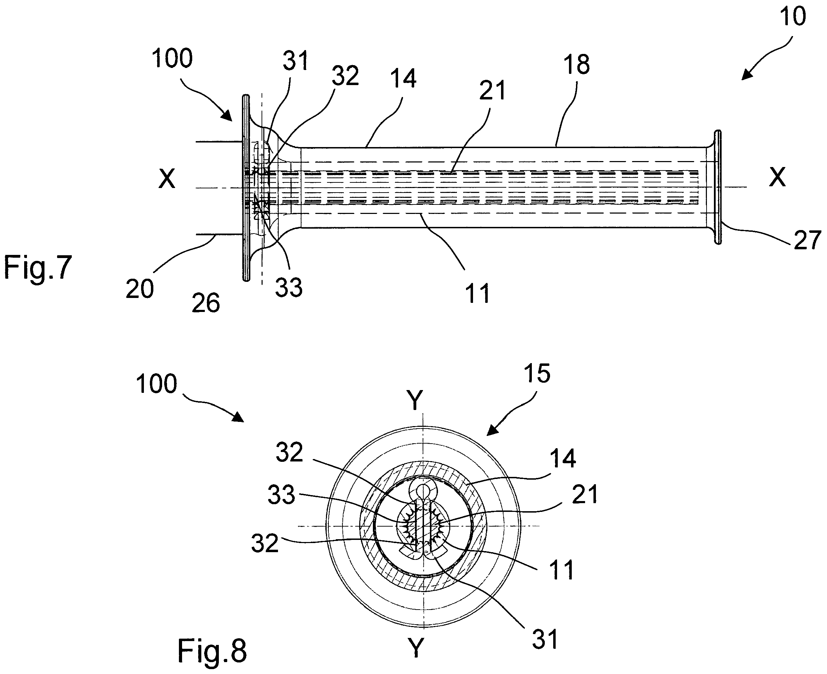

In the embodiment of the fastening system 100 of the invention shown in Figures 7 and 8, the knob 10 and the end 21 of the frame 20 can be connected through fastening means 15 composed of a peg, for example an elastic peg, or of a cotter pin 31 shown in the sectional view of Figure 8, and adapted to be inserted into a hole 32 made in the core 11 and into a hole 33 made in the end 21 of the frame 20.

The hole 32 is made in the core 11 and the hole 33 is made in the end 21 of the frame 20 on a transverse axis Y-Y, preferably perpendicular, to the longitudinal axis X-X of the knob 10; the holes 32 and 33 are adapted to be crosses by the fastening means 15 composed of the peg or of the cotter pin 31, to removably fasten the knob 10 to the end 21 of the frame 20.

Preferably, the fastening means 15 composed of the peg or pf the cotter pin 31 are adapted to be placed inside the knob 10 next to the opening 26 of the external layer 14, wherein the external layer 14 is not in contact any more with the core 11 and widens, and is adapted to contain therein the fastening means 15.

In the embodiment of the fastening system 100 of the invention shown in Figure 9, the knob 10 and the end 21 of the frame 20 can be connected through fastening means 15 composed of a stopper ring 34, for example a stopper ring of the Seeger type, adapted to be inserted into a circular seat 35 made on the end 21 of the frame 20, to removably fasten the knob 10 to the end 21 of the frame 20.

In a preferred way, the stopper ring 34 is placed in the circular seat 35 which is made on the external part of the end 21 with reduced section of the frame 20.

The operation of the knob 10 and of the fastening system 100 of the knob 10 according to the present invention will now be described.

In a first step, the knob 10 is inserted into the end 21 with reduced section of the frame 20, by screwing into the seat 15 with lead screw made in the recesses 16 of the core 11 on the thread 25a made on the end 21 of the frame 20 or sliding the grooves of the recesses 12a, 12b, 12c, 12d on the grooves of the frame 22a, 22b, 22c, 22d.

In a second step, the knob 10 is stopped with the fastening means 15 to block them.

In the embodiment of the knob 10 and of the fastening system 100 comprising fastening means 15 composed of the spring 23, the knob 10 is inserted into the end 21 with reduced section of the frame 20 until the spring 23 goes out of the internal recess 16 of the core 11 projecting from the side surface of the end 21, in order to automatically block the knob 10.

In the embodiment of the knob 10 and of the fastening system 100 comprising fastening means 15 composed of the peg or of the cotter pin 31, the knob 10 is stopped by inserting the fastening means composed of the peg or of the cotter pin 31 into the hole 32 made in the core 11 and into the hole 33 made in the end 21 of the frame 20 on the transverse axis Y-Y, preferably perpendicular, to the longitudinal axis X-X of the knob 10 to removably fasten the knob 10 to the end 21 of the frame 20.

In the embodiment of the knob 10 and of the fastening system 100 comprising fastening means 15 composed of the screw 28, the knob 10 is stopped by screwing the screw 28, inserted into the hole 30 of the base 27, into the threaded hole 29 made in the end 21 of the frame 20, to removably fasten the knob 10 to the end 21 of the frame 20

Advantageously, the interchangeable knob 10 of the invention allows an easy replacement of the knob keeping an efficient fastening to the frame, allowing to adapt and customize it depending on the different users' needs.

## Claims

1. Interchangeable knob (10) for handles comprising:
- a hollow core (11) inserted into an external layer (14) and comprising an internal recess (16) into which an end (21) of a frame (20) is adapted to be inserted, said end (21) having a reduced section with respect to the rest of the frame (20) to which it is connected;
- fastening means (15) adapted to removably fasten the knob (10) to said end (21) and to prevent it from being withdrawn from the frame (20),
**characterized in that** the core (11) comprises first fastening means (15) adapted to be connected to second fastening means (25) made on the end (21) of the frame (20) with reduced section.

2. Interchangeable knob (10) for handles according to claim 1, **characterized in that** it comprises first fastening means (15) adapted to be connected to second fastening means (25) made on the end (21) of the frame (20) with reduced section.

3. Interchangeable knob (10) for handles according to claim 1, **characterized in that** the first fastening means (15) are composed of a seat (15a) with lead screw made on an internal surface (12) of the internal recess (16) of the core (11) and are adapted to be connected to second fastening means (25) composed of a thread (25a) made on an external surface (22) of the end (21) of the frame (20).

4. Interchangeable knob (10) for handles according to any one of the previous claims, **characterized in that** the internal recess (16) of the core (11), similarly to the end (21) of the frame (20), has a conical or tapered shape which narrows towards the external part of the knob (10).

5. Interchangeable knob (10) for handles according to any one of the previous claims, **characterized in that** the recesses (16) of the core (11) has grooves of the recesses (12a, 12b, 12c, 12d) made on the internal surface (12) of the recesses (16) adapted to be in contact with grooves of the frame (22a, 22b, 22c, 22d) made on the external surface (22) of the end (21) with reduced section of the frame (20), when the knob (10) is assembled on the frame (20).

6. Interchangeable knob (10) for handles according to any one of the previous claims, **characterized in that** the fastening means comprise a spring (23) inserted into a seat (24) of the end (21) adapted to be bent remaining inside the profile of the end (21) with reduced section of the frame (20) and adapted to project from the side surface of the end (21) to automatically block the knob (10) after it has been inserted into the end (21) with reduced section of the frame (20).

7. Interchangeable knob (10) for handles according to any one of the previous claims 1, 2 and 4 to 6, **characterized in that** the knob (10) and the end (21) of the frame (20) are adapted to be connected through fastening means (15) capable of being connected to a removable base (27) of the knob (10) and to the end (21) of the frame (20) or through fastening means (15) composed of a stopper ring (34) adapted to be inserted into a circular seat (35) made in the end (21) of the frame (20).

8. Interchangeable knob (10) for handles according to any one of the previous claims 1, 2 and 4 to 7, **characterized in that** the knob (10) and the end (21) of the frame (20) are adapted to be connected through fastening means (15) composed of a peg or of a cotter pin (31) adapted to be inserted into a hole (32) made in the core (11) and into a hole (33) made in the end (21) of the frame (20).

9. Fastening system (100) for an interchangeable knob (10) for handles according to any one of the previous claims, comprising a frame (20) with an end (21) with reduced section and second fastening means (25) made on the end (21) connected to first fastening means (15) made on the knob (10).
